# EUROPÄISCHE PATENTANMELDUNG

(11) **EP 4 517 618 A1**
(43) Veröffentlichungstag der Anmeldung: **05.03.2025**
(21) Anmeldenummer: 23198562.3
(22) Anmeldetag: 20.09.2023
(51) Int. Cl.: G06Q 10/083, B65G 1/02

(54) **MOBILE DEPOTEINRICHTUNG UND VERFAHREN ZU IHREM BETREIBEN**

(30) Priorität: 28.08.2023 EP 23193783
(71) Anmelder: Innovative Robot Delivery GmbH, 53121 Bonn (DE)
(72) Erfinder: Borger, Christian, 53121 Bonn (DE); Mayer, Boris, 53129 Bonn (DE); Schares, Christof, 53127 Bonn (DE)
(74) Vertreter: Jostarndt Patentanwalts-AG

(57) **Zusammenfassung**

Die Erfindung betrifft eine mobile Depoteinrichtung (100) für eine Lagerung und Bereitstellung mehrerer Pakete (500) innerhalb eines vorgesehenen Übergabezeitraums an einem Standort aufweisend
- eine Übergabeeinrichtung (110),
- Trägerelemente (210) und ein Lager (250) für Trägerelemente,
- eine Vielzahl von Lagerpositionen (200),
- ein Verbindungsmittel (120) zum Verbinden der Depoteinrichtung (100) mit einem Zuordnungsmittel (300) für eine Zuordnung von Paketidentifikationsmerkmalen zu Lagerpositionen (200),
- eine Transporteinheit (150), die sich entlang eines Transportwegs (160) in der mobilen Depoteinrichtung (100) bewegen kann und die Pakete (500) in Lagerpositionen (200) der Depoteinrichtung einbringen kann,
- wobei der Transport der Pakete (500) durch die Transporteinheit (150) innerhalb der Depoteinrichtung (100) unter Berücksichtigung der den jeweiligen Paketen (500) anhand der Paketidentifikationsmerkmale zugeordneten Lagerpositionen (200) steuerbar ist.

## Beschreibung

Die Erfindung betrifft eine mobile Depoteinrichtung für eine Lagerung und Bereitstellung mehrerer Pakete innerhalb eines vorgesehenen Übergabezeitraums an einem Standort und ein Verfahren zu ihrem Betreiben.

Im Stand der Technik sind verschiedene Konzepte zur automatischen Einlagerung und Bereitstellung von Paketen in einer Depoteinrichtung bekannt. Beispielsweise ist in EP 1 959 406 A1 eine Paketstation mit Schließfächern und einer Steuereinheit zur Überwachung der Zugangsberechtigungen gezeigt.

Aus der Europäischen Patentschrift EP 1 438 641 B1 ist eine elektronische Paketfachanlage mit einer Vielzahl von elektronischen Paketfächern bekannt, wobei jeweils mehreren elektronischen Paketfächern eine Bedienungseinheit zugeordnet ist. Diese bekannte elektronische Paketfachanlage zeichnet sich dadurch aus, dass eine Zentralsteuereinheit zur Steuerung der Bedienungseinheiten vorgesehen ist, wobei die Zentralsteuereinheit ein Mittel zu einer veränderbaren Zuordnung der Paketfächer zu den Bedienungseinheiten enthält. Die in dieser europäischen Patentschrift offenbarte Paketfachanlage weist starre Schließfächer auf und ist zudem stationär.

Die vorliegende Patentanmeldung beschreibt eine mobile Depoteinrichtung, die dazu dient, Pakete temporär zu lagern und einer Vielzahl von Empfängern an einem Standort zugänglich zu machen. Desweiteren fungiert die mobile Depoteinrichtung dazu, Pakete an einem Standort von einer Vielzahl von Empfängern entgegenzunehmen, temporär zu lagern, an einen Logistikstandort eines Paketdienstleisters zu befördern und dort zu übergeben.

Aufgabe der Erfindung ist es, eine mobile Depoteinrichtung und ein Verfahren zu ihrem Betreiben bereitzustellen, mit dem die Lagerung und Bereitstellung von Paketen möglichst automatisiert und/oder autonom, effizient und mit möglichst geringem ökologischem Fußabdruck durchgeführt werden kann.

Erfindungsgemäß wird diese Aufgabe durch eine mobile Depoteinrichtung mit den Merkmalen des unabhängigen Anspruches 1 gelöst. Vorteilhafte Weiterbildungen der mobilen Depoteinrichtung ergeben sich aus den Unteransprüchen 2-11. Die Aufgabe wird ferner durch ein Verfahren nach Anspruch 12 gelöst. Eine vorteilhafte Ausführungsform des Verfahrens ergibt sich aus dem Unteranspruch 13. Die in dieser Anmeldung offenbarte mobile Depoteinrichtung bietet eine höhere Standortflexibilität und Erweiterbarkeit. Sie kann an verschiedenen Orten temporär aufgestellt werden, um saisonale oder regionale Spitzen im Paketaufkommen abzudecken. Veränderbare Größen der Paketfächer können an unterschiedliche Bedürfnisse angepasst werden. Dies ermöglicht eine flexible Nutzung je nach Paketgröße und -volumen.

Der Begriff "mobil" ist vorliegend nicht darauf beschränkt, dass die Depoteinrichtung selbstfahrend ist. Vielmehr beinhaltet der Begriff mobil im Sinne der Erfindung, die Depoteinrichtung so auszugestalten, dass ihr Standort (jederzeit) veränderbar ist. Eine Veränderung des Standortes kann beispielsweise dadurch geschehen, dass die Ausgabeeinheit ein Fahrzeug beziehungsweise ein Bestandteil oder Anhänger eines Fahrzeuges ist oder mittels eines Fahrzeuges transportierbar ist.

Es ist besonders vorteilhaft, die Depoteinrichtung von ihren Abmessungen so zu gestalten, dass sie in einem regulären Straßenverkehr transportierbar und vorzugsweise auf regulären Parkplätzen abstellbar ist. Die Ausgestaltung der Ausgabeeinheit mit entsprechenden Abmessungen ist von vorteilhafter Weise.

In dieser Anmeldung werden unter Paketen beliebige körperliche Gegenstände verstanden, die transportiert werden können und vorzugsweise bestimmte Abmessungen und/oder ein bestimmtes Gewicht nicht überschreiten.

Dabei kommen Gegenstände des täglichen Bedarfs wie Verbrauchsmaterialien oder Lebensmittel ebenso in Frage wie technische Gegenstände und Gerätschaften. Bei den Paketen handelt es sich um unverpackte Gegenstände, in eine Produktverpackung verpackte Gegenstände und in eine zusätzliche Transportverpackung umverpackte Gegenstände, wobei bei verpackten und umverpackten Gegenständen das Paket die Verpackung bzw. Umverpackung und den darin verpackten Gegenstand umfasst. Ebenso ist es zweckmäßig, unverpackte Gegenstände, insbesondere Warenobjekte erfindungsgemäß zu bearbeiten. Briefsendungen sowie Werbematerialien und -prospekte sind gegebenenfalls auch Pakete im Sinne dieser Anmeldung. Eine Umverpackung kann dabei entweder anteilig oder vollständig vorgenommen werden. Beispielsweise sind (oben) geöffnete Transportboxen von dem Begriff der Umverpackung ebenfalls umfasst.

Zur Lagerung und zur Bereitstellung von Paketen ist eine Übergabe der Pakete an die Depoteinrichtung oder durch die Depoteinrichtung erforderlich, wobei die Übergabe insbesondere eine Einlieferung und/oder eine Ausgabe der Pakete sein kann.

Die vorliegende Anmeldung betrifft Übergaben von Paketen an Empfänger und/oder Übergaben von Paketen durch Einlieferer. Sofern nicht jeweils spezifiziert ist, dass es sich um eine Übergabe an einen Empfänger handelt, sind auch Übergaben von einem Einlieferer mit umfasst. Ebenso ist dann, wenn nicht jeweils spezifiziert ist, dass es sich um eine Übergabe durch einen Einlieferer handelt, auch eine Übergabe an einen Empfänger mit umfasst. Übergaben durch einen Einlieferer werden in der vorliegenden Anmeldung auch als Einlieferung oder als Annahme bezeichnet, Übergaben an Empfänger auch als Auslieferung.

Sowohl natürliche Personen als auch technische Einheiten können Einlieferer im Kontext der vorliegenden Anmeldung sein. Natürliche Personen oder technische Einheiten, die Pakete an die Depoteinrichtung übergeben, werden im Kontext der vorliegenden Anmeldung auch als Versender bezeichnet. Versender bezeichnet insbesondere solche Einlieferer, die einen Transport von Paketen, gegebenenfalls einschließlich einer Abholung, ggf. die Bezahlung beauftragen, ggf. auch an einem Standort, an dem keine Depoteinrichtung vorhanden ist. Die vorliegende Anmeldung umfasst Ausführungsformen, bei denen die Einlieferer von Paketen Versender sind, mit. Empfänger im Sinne der vorliegenden Erfindung sind Einheiten, an die die mobile Depoteinrichtung Pakete oder sonstige Gegenstände übergibt, beziehungsweise übergeben kann. Sowohl natürliche Personen als auch technische Einheiten können Empfänger im Kontext der vorliegenden Anmeldung sein.

Die erfindungsgemäße mobile Depoteinrichtung für die Lagerung und Bereitstellung mehrerer Pakete innerhalb eines vorgesehenen Übergabezeitraums an einem Standort weist die folgenden Komponenten auf:
- eine Übergabeeinrichtung zum Annehmen und/oder Ausgeben von Paketen,
- Trägerelemente und ein Lager für Trägerelemente, wobei die Trägerelemente einen Trägerboden zur Aufnahme eines Pakets aufweisen und entlang eines gegenüberliegenden Seitenpaars je eine Eingreifstruktur und entlang des anderen gegenüberliegenden Seitenpaars je eine Schiebekante aufweisen,
- eine Vielzahl von Lagerpositionen, wobei die Trägerelemente entlang ihrer Schiebekanten in die Lagerpositionen einschiebbar sind,
- ein Verbindungsmittel zum Verbinden der Depoteinrichtung mit einem Zuordnungsmittel für eine Zuordnung von Paketidentifikationsmerkmalen zu Lagerpositionen,
- eine Transporteinheit, die sich entlang eines Transportwegs in der mobilen Depoteinrichtung bewegen kann und die Pakete in Lagerpositionen der Depoteinrichtung einbringen kann, wobei die Transporteinheit auf wenigstens einem linearen Führungssystem angeordnete Eingriffselemente aufweist, die in eine Eingreifstruktur an wenigstens einer Seite der Trägerelemente eingreifen können und wobei die Transporteinheit wenigstens einen mit dem wenigstens einen linearen Führungssystem verbundenen Motor aufweist, um die Eingriffselemente in Richtung der Lagerpositionen zu verschieben.

Der Transport der Pakete durch die Transporteinheit innerhalb der Depoteinrichtung ist dabei unter Berücksichtigung der den jeweiligen Paketen anhand der Paketidentifikationsmerkmale zugeordneten Lagerpositionen steuerbar. Die Transporteinheit ist beispielsweise zweigeteilt in einen oberen Teil und einen unteren Teil, wobei der untere Teil für die Bewegung entlang des Transportwegs verantwortlich ist und der obere Teil für die Einlagerung und Entnahme der Pakete verantwortlich ist. Das lineare Führungssystem ist beispielsweise in eine Decke des oberen Teils integriert. Die Decke kann eine zum Trägerelement passende Geometrie aufweisen und beispielsweise eine Berandung aufweisen, mit der ein aufliegendes Trägerelement gegen Verrutschen gesichert sein kann. Bei der Eingreifstruktur handelt es sich beispielsweise um eine entlang der Seitenkante des Trägerelements verlaufende Eingriffsnut oder um einen Ausschnitt in der Kontur, in der die korrespondierend ausgebildeten Eingriffselemente arretiert werden können. Die Trägerelemente sind beispielsweise wannenförmig mit einer Tiefer von 1 cm ausgebildet. Die wannenartige Ausbildung ist auf den Querschnitt (Seitenansicht) der Trägerelemente bezogen und dient sowohl der Begrenzung der Pakete, sodass sie nicht herunterrutschen können, als auch der besseren platzsparenden Lagerbarkeit. Bei dem Lager für die Trägerelemente kann es sich beispielsweise um eine eigene Vorrichtung handeln. Es ist jedoch auch möglich, die Lagerpositionen als Lager für die Trägerelemente zu nutzen. Das lineare Führungssystem kann beispielsweise durch Linearführungen, bestehend aus einer Schiene und einem Schlitten, der auf der Schiene gleitet, Spindelantriebe mit Spindel und Mutter, pneumatische oder hydraulische Zylinder mit Druckluft oder Hydraulikflüssigkeit, um einen Kolben in einem Zylinder zu bewegen, Linearmotoren, die entlang einer Schiene angebracht sind und eine direkte lineare Bewegung erzeugen können, Riemenantriebe mit Zahnriemen oder einem flachem Riemen, der um Riemenscheiben gewickelt ist, Kettenantriebe oder Förderbänder gebildet sein. Die Transporteinheit weist eine zu den Trägerelementen passende Grundfläche auf, um die Trägerelemente mit darauf befindlichen Paketen sicher zu transportieren. Für einen Einlagerungsvorgang kann die Transporteinheit, nachdem die mobile Depoteinrichtung mitgeteilt bekommen hat, dass ein Einlagerungsvorgang stattfinden soll, an das Lager für Trägerelemente heranfahren und dort ein Trägerelement entnehmen. Dazu fährt die Transporteinheit mittels des wenigstens einen Motors das lineare Führungssystem so weit vor, dass die auf dem linearen Führungssystem angeordneten Eingriffselemente in die Eingreifstruktur eines Trägerelements eingreifen können. Anschließend fährt der Motor das lineare Führungssystem zurück in seine Nullposition und zieht das Trägerelement dabei auf die Transporteinheit. Beim Zurückfahren in die Nullposition fährt vorzugsweise ein weiteres Eingriffselement, das im ausgefahrenen Zustand über den Endpunkt/Umschlagspunkt des linearen Führungssystems hinaus geführt wurde und auf der Unterseite befindlich war, zurück über den Endpunkt/Umschlagspunkt und greift in die gegenüber der ersten Eingreifstruktur befindliche weitere Eingreifstruktur des Trägerelements. Anschließend fährt die Transporteinheit mit dem Trägerelement in die Übergabeeinrichtung und wird dem Einlieferer offenbart. Dieser legt sein zu versendendes Paket auf das Trägerelement. Über ein Verbindungsmittel wird die Depoteinrichtung anschließend mit einem Zuordnungsmittel verbunden, das die Pakete anhand von Paketidentifikationsmerkmalen Lagerpositionen zuordnet, und empfängt dann eine für dieses einzulagernde Paket zugeordnete Lagerposition. Die Depoteinrichtung weist nun die Transporteinheit an, zu dieser Lagerposition zu fahren, woraufhin die Transporteinheit entlang ihres Transportwegs in der Depoteinrichtung fährt, bis sie zu ihrer bestimmten Position fährt. Es kann vorteilhaft sein, vorab zu prüfen, ob das Paket richtig auf das Trägerelement aufgelegt wurde, um ein Herunterfallen des Pakets während des Transports zu verhindern. Richtig liegt das Paket in seiner Ausrichtung im Allgemeinen dann, wenn sein Massepunkt dem Boden des Trägerelements am nächsten ist, das Paket also am flachsten auf dem Trägerelement liegt. Nachdem die Transporteinheit mit Trägerelement und Paket an die Lagerposition herangefahren ist, wird nun mittels des Motors das Förderband ausgelenkt/ausgefahren und das Trägerelement in die Lagerposition eingeschoben.

Für einen Ausgabevorgang empfängt die Depoteinrichtung zunächst über ihr Verbindungsmittel die zugeordnete Lagerposition von dem Zuordnungsmittel und übermittelt es der Transporteinheit. Diese fährt in analoger Weise mit bis zum Endpunkt/Umschlagspunkt ausgefahrenen Eingriffselementen an die übermittelte Lagerposition heran, fährt das Förderband Richtung Nullposition und zieht das Trägerelement über den Eingriff von Eingriffselementen in die Eingreifstruktur des Trägerelements aus der Lagerposition heraus und auf die Transporteinheit. In der Nullposition sind vorzugsweise Eingriffselemente auf beiden Seiten in die Eingreifstruktur des Trägerelements eingeschoben. Anschließend fährt die Transporteinheit mit Trägerelement und Paket in die Übergabeeinrichtung, offenbart dem Empfänger sein Paket und wartet, bis dieser es entnimmt oder die Transporteinheit eine neue Anweisung erhält. Nach Entnahme des Pakets kann die Transporteinheit an das Lager für Trägerelemente heranfahren und das Trägerelement dort verstauen. Bei einer bevorzugten Ausbildung der mobilen Depoteinrichtung ist das lineare Führungssystem ein Förderband, die Eingriffselemente sind auf dem Förderband angeordnete Mitnehmer und die Eingreifstruktur ist eine Eingriffsnut mit zu den Mitnehmern korrespondierenden Dimensionen. Das Förderband stellt unter anderem deshalb eine bevorzugte Ausbildung dar, weil es hohe Reibwerte aufweisen kann und in die Decke der Transporteinheit integriert werden kann, auf die das Trägerelement aufgelegt werden kann.

Eine vorteilhafte Weiterbildung der mobilen Depoteinrichtung zeichnet sich dadurch aus, dass die Transporteinheit weiter wenigstens einen ausfahrbaren/ausklappbaren Extender aufweist, der in ausgefahrenem/ausgeklapptem Zustand in die Eingreifstruktur der Trägerelemente eingreift und der geeignet ist, die Trägerelemente über den Endpunkt/Umschlagspunkt des wenigstens einen linearen Führungssystems, insbesondere Förderbands, hinaus mitzunehmen, wobei die Länge des Extenders einen Abstand zwischen dem Endpunkt/Umschlagspunkt des linearen Führungssystems und einer dem Transportweg zugewandten Kante der Lagerpositionen überschreitet und durch Antreiben eines mit dem Extender verbundenen Führungsmittels der Spalt zwischen Transporteinheit und Lagerposition überbrückt wird. Bei dem Führungsmittel kann es sich beispielsweise um ein (weiteres) Förderband handeln. Es sind jedoch auch hubzylindrische, (elektro)magnetische und/oder lineare Antriebe für das Führungsmittel möglich. Der Extender ist beispielsweise zwischen einer abgetauchten und angehobenen Position schaltbar. Mit den Extendern kann sichergestellt werden, dass die Trägerelemente ausreichend tief in die Lagerpositionen eingeschoben werden und die Transporteinheit auch mit hohen Geschwindigkeiten entlang ihres Transportwegs durch die Depoteinrichtung fahren kann, ohne dabei an eingeschobenen Trägerelementen hängen zu bleiben. Die Extender können insbesondere mit einem weiteren Förderband verbunden sein, welches mit einem eigenen Motor verbunden ist. In einer Weiterbildung dieser Anordnung weist die Transporteinheit drei parallel angeordnete Förderbänder auf, wobei auf den jeweils äußeren Förderbändern Eingriffselemente angeordnet sind und das mittlere Förderband mit dem ausfahrbaren/ausklappbaren Extender verbunden ist. Bei einem Einlieferungsvorgang folgt der Extender in einer abgetauchten Position den auf den Förderbändern angeordneten Eingriffselementen, bis sie in der Nähe des Umschlagspunkts sind. Dort kann der Extender angehoben werden und von seiner abgetauchten Position nach oben verlagert werden und in die Eingreifstruktur des Trägerelements eingreifen. Die Aktivierung des Extenders kann beispielsweise über ein elektrisches Signal erfolgen. Der Extender kann beispielsweise aus einem rotierbar gelagerten Arm bestehen, an dessen Seite ein ausfahrbarer Zylinder oder zwei über ein Gelenk verbundene Arme verbunden sind, wobei das Gelenk beispielsweise mittels eines bistabilen Magneten zwischen einer angewinkelten und gestreckten Position geschaltet wird. Es sind jedoch auch alternative Ausbildungen denkbar. In diesem Beispiel würde ein Ausfahren des Zylinders oder ein Strecken des Gelenks den rotierbar gelagerten Arm des Extenders anheben und diesen in die Eingreifstruktur einstecken und in der Eingreifstruktur arretieren.

Ebenso würden bei einem Auslagerungsvorgang die äußeren Förderbänder in die maximal ausgelenkte Position verfahren werden, während das mittlere Förderband gerade so weit fährt, dass der Extender im abgetauchten (nicht angehobenen) Zustand exakt unterhalb der Eingreifstruktur befindlich ist. Dies kann beispielsweise sensorisch unterstützt erfolgen. Der Extender würde angehoben und das mittlere Förderband zurückgefahren bis zum Umschlagspunkt der Förderbänder. Ab hier würden die auf den äußeren Förderbändern angeordneten Eingriffselemente in die Eingreifstruktur eingreifen und das Trägerelement in vorbeschriebener Weise auf die Transporteinheit ziehen. Ab dem Punkt, ab dem die Eingriffselemente der äußeren Förderbänder die Bewegung des Trägerelements kontrollieren, kann der Extender wieder abtauchen/abgesenkt werden und in seine Nullposition zurückfahren.

In einer bevorzugten Weiterbildung der Erfindung ist der Transportweg als eine Transportgasse ausgebildet und die Transporteinheit kann spiegelsymmetrisch angeordnete Eingriffselemente beidseitig verschieben, wobei die Symmetrieachse entlang der Transportgasse, insbesondere der Mitte der Transportgasse, verläuft. So kann die Transporteinheit Ein- und Auslagervorgänge nach beiden Seiten ausführen. Dass der Transportweg als Transportgasse ausgebildet ist, bedeutet in diesem Fall, dass sich Lagerpositionen beidseitig des Transportweges befinden. Mit dieser Weiterbildung wird die Ausnutzung des limitiert vorhandenen Platzes in der Depoteinrichtung erhöht und die Anzahl der benötigten Transportwege reduziert.

Die erfindungsgemäße mobile Depoteinrichtung zeichnet sich in einer Weiterbildung dadurch aus, dass die Lagerpositionen durch Auflageschienen ausgebildet sind und dass die Transporteinheit ein Mittel aufweist, mit dem eine vertikale Position der Transporteinheit verändert werden kann. Dies vereinfacht den Aufbau der Lagerpositionen in der Art eines Lagerregals. Beispielsweise ist die Transporteinheit zweigeteilt in einen oberen Teil und einen unteren Teil, wobei der untere Teil für die Fortbewegung entlang des Transportwegs beispielsweise mittels eines Antriebsstrangs und damit verbundenen Rädern verantwortlich ist, während der obere Teil von dem unteren Teil mittels eines Motors angehoben werden kann. Der obere Teil beinhaltet eine Auflagefläche für die Trägerelemente, ein lineares Führungssystem, das in die Auflagefläche integriert sein kann, und vorzugsweise Extender. Zusätzlich ist es bevorzugt, wenn die Auflageschienen vertikal äquidistant verteilt sind und der Abstand zwischen zwei benachbarten Auflageschienen 5 cm unterschreitet und bevorzugterweise 3,5 cm beträgt. Je kleiner die Abstände zwischen den Auflageschienen, desto effizienter kann der Raum des Lagerregals ausgenutzt werden. Bei der beispielhaft beschriebenen Ausführung der zweigeteilten Transporteinheit kann der Motor zur Höhenanpassung des oberen Teils als Stepper-Motor ausgebildet sein, wobei die Schrittweite in einfacher Weise auf das Raster abgestimmt werden kann. Prinzipiell kann der Abstand (das Raster) auch kleiner gewählt werden. Beeinflusst wird die Höhe des Rasters durch
- die Höhe des Trägerelements
- den notwendigen Bewegungsfreiraum zwischen zwei leeren Trägerelementen (beispielsweise 5 mm).

Das System an sich kann auch in Minitaturgröße gebaut werden. Dann wäre der Mindestabstand des Rasters kleiner als 3,5 cm, beispielsweise 3,5 mm, zwischen zwei übereinanderliegenden Auflageschienen. Beispielsweise kann eine mobile Depoteinrichtung für den Transport von Briefen angepasst sein. Es ist auch denkbar zwei oder mehr Transportgassen mit eigenen Transporteinheiten und Übergabeeinrichtungen in einer mobilen Depoteinrichtung zu verwenden, wobei eine erste Transportgasse ein Raster von 3,5 cm aufweist und für alle Pakete im Sinne dieser Anmeldung geeignet ist und wobei eine zweite Transportgasse ein Raster kleiner als 3,5 cm, beispielsweise 3,5 mm, aufweist und hauptsächlich für Briefe geeignet ist.

Gemäß einer vorteilhaften Weiterbildung der Erfindung ist in der mobilen Depoteinrichtung eine Sensoreinheit in der Übergabeeinrichtung angeordnet, die wenigstens ein Paketidentifikationsmerkmal eines einzulagernden Pakets erfassen kann, wobei die Zuordnung des Pakets zu der Lagerposition unter Berücksichtigung des erfassten Paketidentifikationsmerkmals erfolgt, wobei wenigstens eine Höhe des einzulagernden Pakets erfasst wird. Insbesondere wird hier die maximale Höhe des Pakets in der Ausrichtung, in der es auf dem Trägerelement in der Übergabeeinrichtung liegt, erfasst. Mit dieser Weiterbildung kann die Auswahl der Lagerposition optimiert erfolgen. Besonders bevorzugt ist die Kombination dieses Merkmals in die mobile Depoteinrichtung mit lagerregalartig angeordneten Auflageschienen. So kann die Anzahl einlagerbarer Pakete effizient maximiert werden.

Gemäß einer weiteren vorteilhaften Ausbildung der Erfindung weist das Trägerelement unterschiedliche Reibwerte an den Schiebekanten und dem Trägerboden auf, wobei der Reibwert des Trägerbodens wesentlich höher als der Reibwert der Schiebekanten ist. Somit wird das Einschieben des Trägerelements in die Lagerpositionen begünstigt und ein Verrutschen des Pakets auf dem Trägerboden des Trägerelements verhindert.

Gemäß einer weiteren vorteilhaften Ausbildung der Erfindung weist die Transporteinheit ein Haltemittel auf, mit dem das Trägerelement gegen Verschieben oder Abheben gesichert wird. In einer vorteilhaften Weiterbildung dieser mobilen Depoteinrichtung weist das Haltemittel eine Schiene auf, in die die Schiebekante des Trägerelements eingeschoben werden kann. Die Schiene hält das Trägerelement entlang der Schiebekante dabei in vertikaler Richtung fest. Mit dieser Ausbildung wird eine (versehentliche) Entnahme des Trägerelements in der Übergabeeinrichtung durch einen Empfänger und ein Verrutschen des Trägerelements in Richtung des Transportwegs beim Transport verhindert.

Gemäß einem weiteren Aspekt der Erfindung wird auch ein Verfahren zum Betreiben einer mobilen Depoteinrichtung, insbesondere einer mobilen Depoteinrichtung nach einer der vorbeschriebenen Ausbildungen bereitgestellt. Das Verfahren zeichnet sich dadurch aus, dass
für einen Einlagerungsvorgang eines Pakets
- eine Transporteinheit ein Trägerelement einem Lager für Trägerelemente entnimmt und in der Transporteinheit arretiert,
- die Transporteinheit in eine Übergabeeinrichtung der mobilen Depoteinrichtung fährt,
- die Übergabeeinrichtung geöffnet wird, so dass ein Einlieferer ein Paket auf den Trägerboden des Trägerelements legen kann,
- die Transporteinheit wartet, bis das Paket auf das Trägerelement gelegt ist,
- eine in Abhängigkeit wenigstens eines Paketidentifikationsmerkmals zugeordnete Lagerposition empfangen wird,
- die Transporteinheit entlang eines Transportwegs in der mobilen Depoteinrichtung gesteuert wird, bis sich die Transporteinheit in einer der empfangenen Lagerposition gegenüberliegenden Position befindet,
- ein Motor wenigstens ein lineares Führungssystem antreibt, das über Eingriffselemente in eine Eingreifstruktur des Trägerelements greift und das Trägerelement auf seinen Schiebekanten in die Lagerposition eingeschoben wird,
   und **dass**
   für einen Auslagerungsvorgang eines Pakets,
- anhand eines Paketidentifikationsmerkmals eine Lagerposition empfangen wird,
- die Transporteinheit entlang des Transportwegs in der mobilen Depoteinrichtung gesteuert wird, bis sich die Transporteinheit in einer der empfangenen Lagerposition gegenüberliegenden Position befindet,
- der Motor das wenigstens eine lineare Führungssystem antreibt, das über Eingriffselemente in die Eingreifstruktur des in der Lagerposition befindlichen Trägerelements eingreift und das das Trägerelement auf seinen Schiebekanten aus der Lagerposition herauszieht und auf der Transporteinheit festhält, vorzugsweise arretiert,
- die Transporteinheit mit dem Paket in die Übergabeeinrichtung der mobilen Depoteinrichtung fährt,
- die Übergabeeinrichtung geöffnet wird, so dass ein Empfänger das Paket entnehmen kann und
- die Transporteinheit das Trägerelement in das Lager für die Trägerelemente einbringt.

Gemäß einer vorteilhaften Weiterbildung des Verfahrens wird
bei einem Einlagerungsvorgang beim Einschieben des Trägerelements in die Lagerposition, bevor oder während die auf wenigstens einem linearen Führungssystem befindlichen Eingriffselemente sich an einem Endpunkt/Umschlagspunkt des linearen Führungssystems aus der Eingreifstruktur herauslösen, wenigstens ein Extender ausgeklappt/ausgefahren und angehoben, sodass er von unten in die Eingreifstruktur eingreift und das Trägerelement über den Endpunkt/Umschlagspunkt des linearen Führungssystems hinaus in die Lagerposition einschiebt, wobei der Extender vor einem Zurückfahren abgesenkt wird, ehe der Extender und das lineare Führungssystem in ihre Ausgangsposition zurückfahren,
   und
bei einem Auslagerungsvorgang beim Herausziehen des Trägerelements aus der Lagerposition der Extender in einer abgesenkten Position so weit ausgelenkt, bis der Extender bei einem Anheben von unten in die Eingreifstruktur des Trägerelements eingreifen würde, der Extender angehoben und anschließend zurückgefahren, bis sich die Eingreifstruktur des Trägerelements über dem Endpunkt/Umschlagspunkt des linearen Führungssystems befindet, wobei das wenigstens eine mit Eingriffselementen ausgestattete lineare Führungssystem zurückfährt, bis die Eingriffselemente in die Eingreifstruktur des Trägerelements eingreifen, so dass der Extender eingeklappt/abgetaucht werden kann und das Trägerelement über die Eingriffselemente auf die Transporteinheit gezogen und festgehalten, vorzugsweise arretiert, wird.

Die vorliegende Erfindung wird nachfolgend anhand bevorzugter Ausführungsbeispiele unter Bezugnahme auf die beigefügten Figuren näher erläutert. Es ist jedoch zu beachten, dass die beschriebenen Ausführungsbeispiele lediglich zur Veranschaulichung dienen und die Erfindung nicht darauf beschränkt ist. Ein Fachmann wird verstehen, dass verschiedene Modifikationen, Änderungen und Variationen der vorliegenden Erfindung möglich sind, die von dem dargestellten Ausführungsbeispiel abweichen können. Solche Modifikationen, Änderungen und Variationen werden als im Rahmen der Erfindung liegend angesehen und werden durch die beigefügten Ansprüche abgedeckt. Ein Fachmann wird in der Lage sein, verschiedene sinnvolle Kombinationen der Merkmale der vorliegenden Erfindung in Abhängigkeit von den spezifischen Anforderungen und Gegebenheiten zu erkennen.
A) Mobile Depoteinrichtung mit einem Lager für Trägerelemente, insbesondere mobile Depoteinrichtung nach einer in dieser Anmeldung beschriebenen Ausführungsformen, wobei Lagerpositionen als Lager für die Trägerelemente verwendbar sind.
B) Mobile Depoteinrichtung, insbesondere mobile Depoteinrichtung nach einer in dieser Anmeldung beschriebenen Ausführungsformen, wobei zwei oder mehr Transportgassen mit eigenen Transporteinheiten und Übergabeeinrichtungen in einer mobilen Depoteinrichtung angeordnet sind, wobei eine erste Transportgasse ein erstes Raster aufweist und wobei eine zweite Transportgasse ein zweites Raster aufweist, wobei das zweite Raster wesentlich kleiner als das erste Raster ist.
C) Mobile Depoteinrichtung nach B), wobei die erste Transportgasse ein Raster von 3,5 cm aufweist und für alle Pakete im Sinne dieser Anmeldung geeignet ist und wobei eine zweite Transportgasse ein Raster kleiner als 3,5 cm, beispielsweise 3,5 mm, aufweist und hauptsächlich für Briefe geeignet ist.

Von den Abbildungen zeigt:
- **Fig. 1**: eine erfindungsgemäße mobile Depoteinrichtung,
- **Fig. 2**: eine Transportgasse mit beidseitig angeordneten Lagerpositionen,
- **Fig. 3**: eine Transporteinheit einer erfindungsgemäßen mobilen Depoteinrichtung,
- **Fig. 4**: Mitnehmer auf zwei außen angeordneten Förderbändern für die Übertragung eines Trägerelements von einer Transporteinheit in eine Lagerposition (Ein- und Auslagerung),
- **Fig. 5**: synchron zu Mitnehmern arbeitende Extender in Vorbereitung der Überbrückung eines Spaltes zwischen Transporteinheit und Lagerposition,
- **Fig. 6**: eine Ansicht auf ein Trägerelement,
- **Fig. 7**: eine Detailansicht eines Trägerelements,
- **Fig. 8**: Extender, die ein Transportelement über die Transporteinheit hinaus schieben,
- **Fig. 9**: Extender, die ein Transportelement noch weiter über die Transporteinheit hinaus schieben,
- **Fig. 10**: eine Seitenansicht eines mittleren Förderbands mit Extender,
- **Fig. 11**: eine isolierte Ansicht des Extenders,
- **Fig. 12**: eine isolierte Ansicht eines weiteren Extenders,
- **Fig. 13**: eine Transporteinheit mit Extender,
- **Fig. 14**: eine Transporteinheit mit ausgefahrenem Extender in Eingriff mit Trägerelement.

Zunächst werden die Bezugszeichen allgemein beschrieben. Auf die einzelnen Zeichen wird im Zusammenhang mit den jeweiligen Abbildungen hingewiesen. In den nachfolgenden Darstellungen werden identische Bezugszeichen verwendet, um entsprechende Elemente eindeutig zu kennzeichnen.

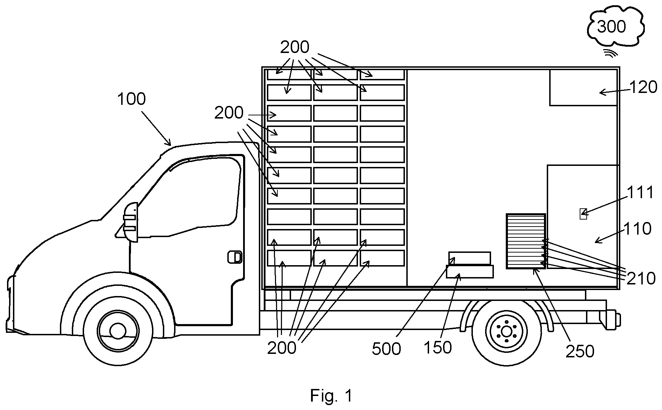

Bei der in den Figuren 1 bis 11 gezeigten Ausbildung der mobilen Depoteinrichtung 100 ist das lineare Führungssystem 151 ein Förderband, die Eingriffselemente 152 sind auf dem Förderband angeordnete Mitnehmer und die Eingreifstruktur 212 ist eine Eingriffsnut mit zu den Mitnehmern korrespondierenden Dimensionen. Die Transporteinheit 150 ist eingerichtet, in der Depoteinrichtung 100 entlang eines Transportwegs 160 zu fahren und ihre vertikale Position zu verändern.

Für einen Einlagerungsvorgang fährt eine Transporteinheit 150, nachdem die mobile Depoteinrichtung 100 mitgeteilt bekommen hat, dass ein Einlagerungsvorgang stattfinden soll, an ein Lager 250 für Trägerelemente 210 heran und entnimmt dort ein Trägerelement 210. Dazu fährt die Transporteinheit 150 zunächst einen Extender 154 aus, bis er sich unterhalb einer Eingreifstruktur 212 eines Trägerelements 210 befindet, aktiviert den Extender 154, um in die Eingreifstruktur 212 zu greifen und fährt anschließend ein mit dem Extender 154 verbundenes Führungsmittel 156 zurück, bis sich die Eingreifstruktur 156 über dem einem Endpunkt/Umschlagspunkt 158 des linearen Führungssystems 151 befindet und die auf dem linearen Führungssystem 151 angeordneten Eingriffselemente 152 in die Eingreifstruktur 212 eines Trägerelements 210 eingreifen können. Anschließend fährt der Motor das lineare Führungssystem 151 zurück in seine Nullposition und zieht das Trägerelement 210 dabei auf die Transporteinheit 150. Beim Zurückfahren in die Nullposition fährt vorzugsweise ein weiteres Eingriffselement 152, das im ausgefahrenen Zustand über den Endpunkt/Umschlagspunkt 158 des linearen Führungssystems 151 hinaus geführt wurde und auf der Unterseite befindlich war, zurück über den Endpunkt/Umschlagspunkt 158 und greift in die gegenüber der ersten Eingreifstruktur 212 befindliche weitere Eingreifstruktur 212 des Trägerelements 210. Anschließend fährt die Transporteinheit 150 mit dem Trägerelement 210 in die Übergabeeinrichtung 110 und wird dem Einlieferer offenbart. Dieser legt sein zu versendendes Paket 500 auf das Trägerelement 210. Über ein Verbindungsmittel 120 wird die Depoteinrichtung 100 anschließend mit einem Zuordnungsmittel 300 verbunden, das die Pakete 500 anhand von Paketidentifikationsmerkmalen Lagerpositionen 200 zuordnet, und empfängt dann eine für dieses einzulagernde Paket 500 zugeordnete Lagerposition 200. Die Depoteinrichtung 100 weist nun die Transporteinheit 150 an, zu dieser Lagerposition 200 zu fahren, woraufhin die Transporteinheit 150 entlang ihres Transportwegs 160 in der Depoteinrichtung 100 fährt, bis sie ihre bestimmte Position erreicht. Nachdem die Transporteinheit 150 mit Trägerelement 210 und Paket 500 an die Lagerposition 200 herangefahren ist, wird nun mittels des Motors das Förderband ausgelenkt/ausgefahren und das Trägerelement 210 in die Lagerposition 200 eingeschoben. Die Extender 154 werden spätestens ab dem Endpunkt/Umschlagspunkt 158 angehoben und schieben das Trägerelement 210 vollständig in die Lagerposition 200 ein.

Für einen Ausgabevorgang empfängt die Depoteinrichtung 100 zunächst über ihr Verbindungsmittel 120 die zugeordnete Lagerposition 200 von dem Zuordnungsmittel 300 und übermittelt es der Transporteinheit 150. Das lineare Führungssystem 151 wird in die maximal ausgelenkte Position verfahren, während das mit dem Extender 154 verbundene Führungsmittel 156 gerade so weit fährt, dass der Extender 154 im abgetauchten (nicht angehobenen) Zustand exakt unterhalb der Eingreifstruktur 212 befindlich ist. Der Extender 154 wird angehoben und das mittlere Förderband zurückgefahren bis zum Endpunkt/Umschlagspunkt 158 der Förderbänder. Ab hier greifen die auf den äußeren Förderbändern angeordneten Eingriffselemente 152 in die Eingreifstruktur 212 ein und das Trägerelement 210 wird in vorbeschriebener Weise auf die Transporteinheit 150 gezogen. Ab dem Punkt, ab dem die Eingriffselemente 152 der äußeren Förderbänder die Bewegung des Trägerelements 210 kontrollieren, kann der Extender 154 wieder abtauchen/abgesenkt werden und in seine Nullposition zurückfahren. In der Nullposition sind vorzugsweise Eingriffselemente 152 auf beiden Seiten in die Eingreifstruktur 212 des Trägerelements 210 eingeschoben. Anschließend fährt die Transporteinheit 150 mit Trägerelement 210 und Paket 500 in die Übergabeeinrichtung 110, offenbart dem Empfänger sein Paket 500 und wartet, bis dieser es entnimmt oder die Transporteinheit 150 eine neue Anweisung erhält. Nach Entnahme des Pakets 500 kann die Transporteinheit 150 an das Lager 250 für Trägerelemente 210 heranfahren und das Trägerelement 210 dort verstauen.

**Fig. 1** zeigt eine erfindungsgemäße mobile Depoteinrichtung 100, aufweisend eine Übergabeeinrichtung 110, Trägerelemente 210, ein Lager 250 für die Trägerelemente 210, eine Vielzahl von Lagerpositionen 200, ein Verbindungsmittel 120 und eine Transporteinheit 150, die von der Übergabeeinrichtung 110 zu den Lagerpositionen 200 fahren kann. Die mobile Depoteinrichtung 100 nutzt das Verbindungsmittel 120 zur Kommunikation mit einem Zuordnungsmittel 300, um die Lagerpositionen 200 anhand von Paketidentifikationsmerkmalen Paketen 500 zuordnen zu können. Eine Sensoreinheit 111 zur Erfassung einer Höhe eines Pakets 500 ist in der Übergabeeinrichtung 110 gezeigt.

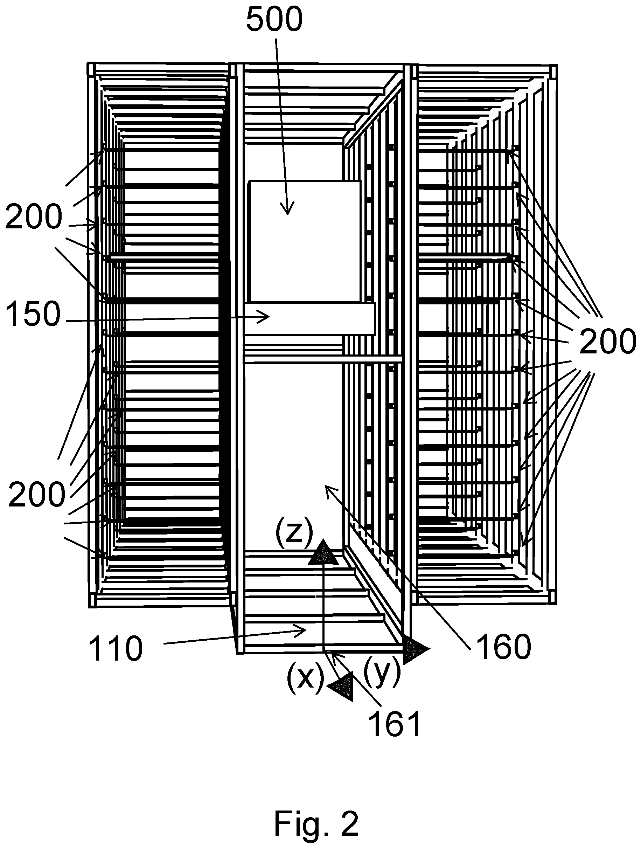

**Fig. 2** zeigt einen Transportweg 160, hier eine Transportgasse, mit beidseitig angeordneten Lagerpositionen 200. Eine Achse 161 ist gezeigt, die die drei für die Erfindung relevanten Raumrichtungen definiert. In y- und -y-Richtung werden die Pakete 500 in die Lagerpositionen 200 eingeschoben. Die Transporteinheit 150 ist in x- und -x-Richtung in der Transportgasse verfahrbar. Die vertikale Position der Transporteinheit 150 entlang der z-Achse kann hier durch einen nicht gezeigten Motor verändert werden. Dabei wird nicht zwangsweise die komplette Transporteinheit 150 in z-Richtung verschoben. Es ist denkbar, die Transporteinheit 150 in einen Ober- und Unterteil zu trennen, wobei nur der Oberteil in seiner vertikalen Position veränderbar ist.

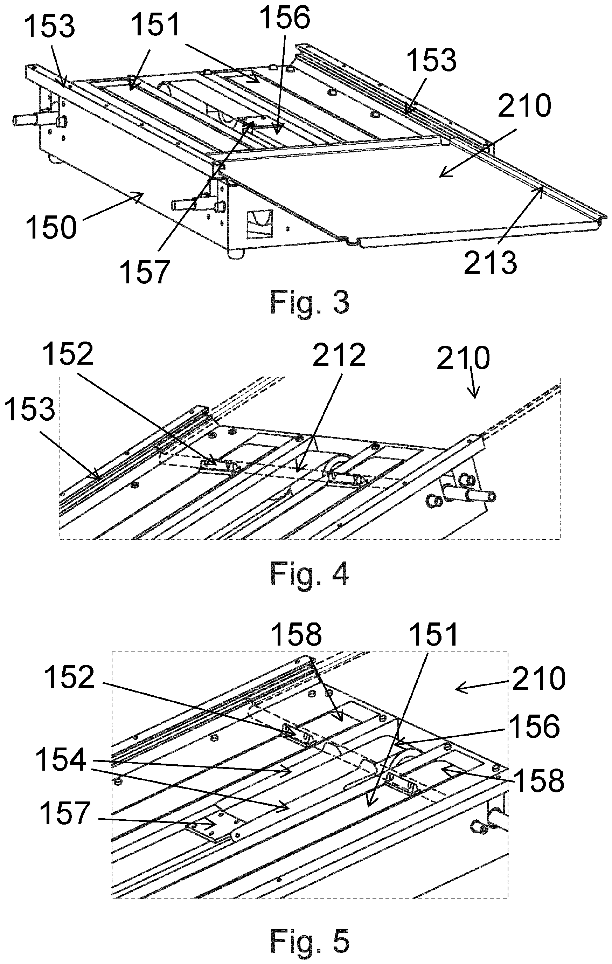

**Fig. 3** zeigt eine Transporteinheit 150 mit zwei linearen Führungssystemen 151, hier zwei Förderbänder, und einem mittleren mit einem Schlitten 157 eines hier ausgeblendeten Extenders 154 (siehe Fig. 5) verbundenen Führungsmittel 156, hier ebenfalls durch ein Förderband realisiert. Die Transporteinheit 150 weist an ihrer Oberseite eine Wannenform auf, wobei der Rand der Wanne durch in y-Richtung zeigende Schienen 153 gebildet wird, die ein Verrutschen der Trägerelemente 210 in Fahrtrichtung und eine Entnahme in z-Richtung verhindern. Ein Trägerelement 210 ist entlang von Schiebekanten 213 in die Schienen 153 einschiebbar und im eingeschobenen Zustand beispielsweise vor einem Verrutschen während des Transports gesichert. Das Trägerelement 210 ist hier in ausgelenktem Zustand mit der Transporteinheit 150 verbunden.

In **Fig. 4** ist die Transporteinheit 150 aus Fig. 3 dargestellt, wobei das Trägerelement 210 durch Strichlinien nur angedeutet ist, um den Eingriff der auf den äußeren Förderbändern befindlichen Eingriffselemente 152, hier Mitnehmer, in die Eingreifstruktur 212, hier Eingriffsnut, des Trägerelements 210 zeigen zu können.

Die in **Fig. 5** dargestellte Transporteinheit 150 weist zusätzlich Extender 154 zur Überbrückung eines Spalts zwischen Transporteinheit 150 und Lagerposition 200 auf. Die Extender 154 haken selbst von unten in die Eingriffsnut des Trägerelements 210 ein. Die Extender 154 weisen einen gemeinsamen Schlitten 157 auf, zu dem sie verbunden sind. Der Schlitten 157 ist in das mittlere Förderband eingelassen und wird bei Aktivierung des Förderbands mitgezogen. Die Eingriffsnut befindet sich im Zustand in Fig. 5 kurz vor dem Umschlagspunkt 158 der Förderbänder.

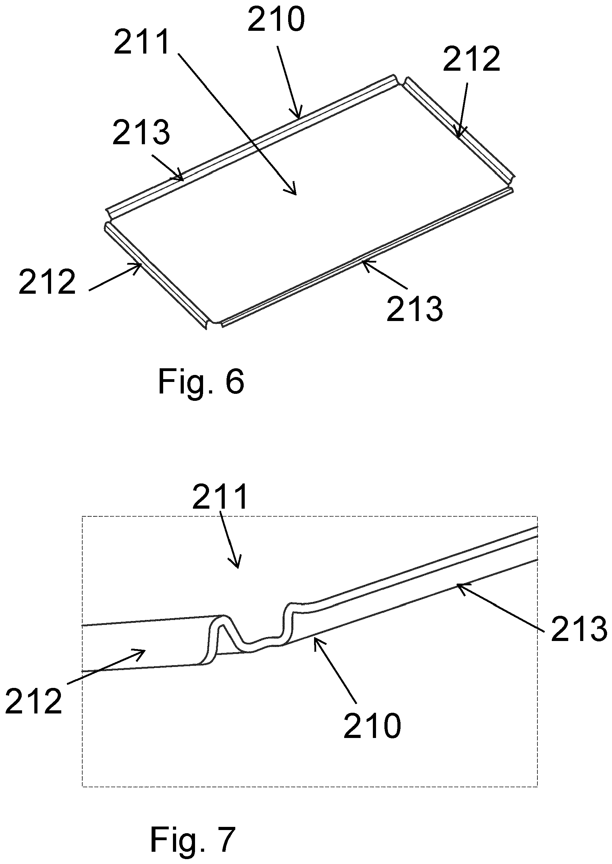

**Fig. 6** zeigt ein wannenartig ausgebildetes Trägerelement 210. Die lange Seite, entlang der gegenüberliegend Schiebekanten 213 verlaufen, entspricht in ihrer Länge der Tiefe der Lagerpositionen 200. Entlang der kurzen Seiten verlaufen gegenüberliegend die Eingreifstrukturen 212, hier Eingriffsnuten.

In **Fig. 7** ist im Detail eine Ecke des Trägerelements 210 aus Fig. 6 gezeigt. Die Schiebekante 213 zeichnet sich dadurch aus, dass ihre Auflagefläche im Wesentlichen parallel zum Trägerboden 211 des Trägerelements 210 verläuft. Bevorzugterweise ist der Trägerboden 211 dabei mit einem höheren Reibwert als die Schiebekante 213 ausgebildet, sodass sich das Trägerelement 210 zwar leicht in die Lagerpositionen 200 einschieben lässt, die Pakete 500 auf dem Trägerboden 211 jedoch nicht verrutschen können. Zudem ist die Eingriffsnut für das Einschieben bzw. Herausziehen näher zu sehen.

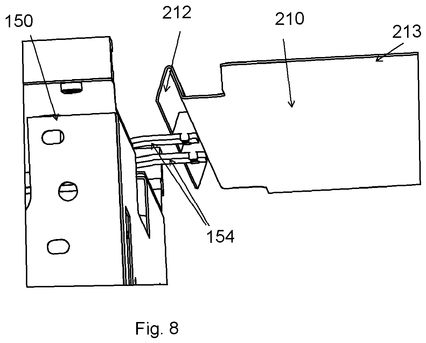

**Fig. 8** zeigt, wie die Extender 154 das Trägerelement 210 über die Transporteinheit 150 hinaus schieben. Die Mitnehmer, die zuvor das Trägerelement 210 schoben, sind nun über den hier nicht dargestellten Umschlagspunkt 158 (siehe Fig. 5) der Förderbänder auf die Unterseite der Förderbänder geklappt. Dies erfolgt synchron zur Schiebebewegung des Extenders 154. Dabei werden vorzugsweise auch die bei der Rotation entstehenden unterschiedlichen Beschleunigungswerte berücksichtigt. Es ist möglich, alle drei Förderbänder mit einem gemeinsamen hier nicht dargestellten Motor zu verbinden. Alternativ ist es möglich, das mittlere Förderband mit einem eigenen Motor zu versehen.

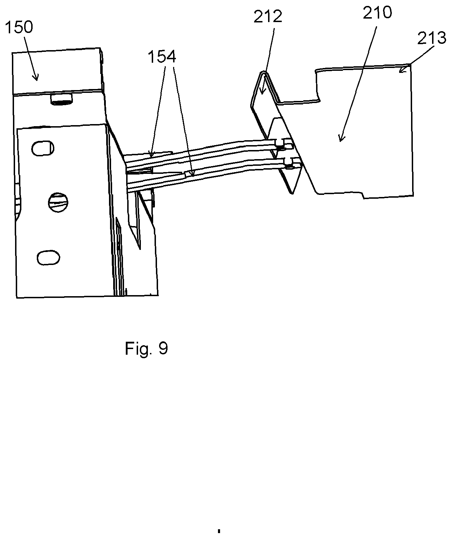

In **Fig. 9** sind die Extender 154 noch weiter ausgelenkt und in der Eingreifstruktur 212 des Trägerelements 210 arretiert, um das Trägerelement 210 entlang seiner Schiebekanten 213 so tief wie möglich in eine hier nicht gezeigte Lagerposition 200 (siehe Fig. 2) einzuschieben.

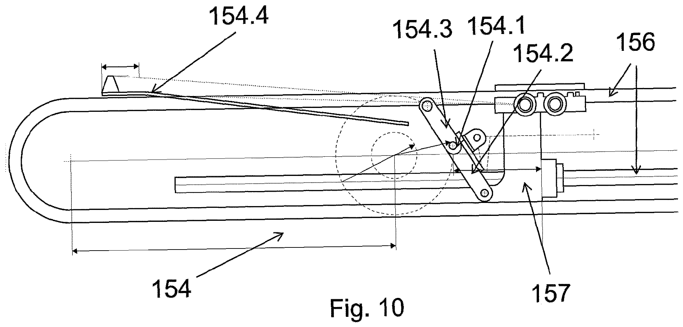

**Fig. 10** zeigt eine Seitenansicht eines mittleren Förderbands mit Extender 154. Das Anheben der Extender 154 findet hier mittels zweier über ein Gelenk 154.1 verbundener Arme 154.2, 154.3 statt. Das untere Ende des ersten Arms 154.2 ist mit dem Schlitten 157 verbunden. Der Winkel des Gelenks 154.1 kann über einen mit dem Schlitten 157 verbundenen Mechanismus variiert werden. Dies wird vorzugsweise elektrisch über im Schlitten 157 verbaute und hier nicht näher erläuterte Elektronik gesteuert. Alternativ wäre es ebenso denkbar, einen Druckzylinder oder weitere dem Fachmann bekannte Alternativen anstatt der Arme 154.2, 154.3 zu verwenden. Der zweite Arm 154.3 ist seitlich an den Hauptarm 154.4 des Extenders gekoppelt. Der Hauptarm 154.4, an dessen Ende sich ein Mitnehmer zum Eingriff in die Eingriffsnut befindet, ist rotatorisch bewegbar mit dem Schlitten 157 verbunden. Ein Strecken oder Beugen des Gelenks 154.1 verändert hier die Höhe des Hauptarms 154.4 des Extenders 150 und bewirkt ein Auf- oder Abtauchen. Das mit dem Extender 154 verbundene Führungsmittel 156 ist hier als Förderband dargestellt, wobei das Förderband zusätzlich durch eine Führungsstange mit im Schlitten 157 verbauter Führungsbuchse bei der Stabilisation des Schlittens 157 unterstützt wird.

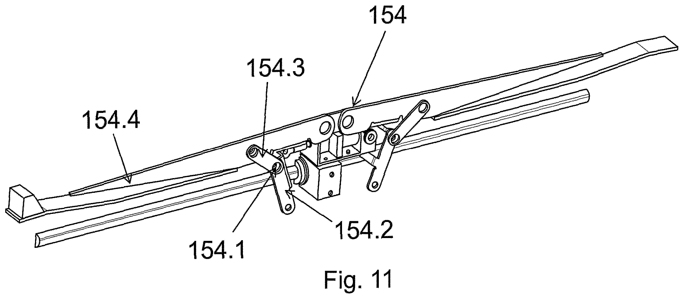

In **Fig. 11** ist der Extender 154 isoliert aus einer anderen Perspektive dargestellt. Statt des Förderbands sind auch sämtliche dem Fachmann bekannte Lösungen zur Realisierung einer linearen Führung 156 für den Extender 154 wie Linearführungen, Spindelantriebe, pneumatische oder hydraulische Zylinder, Linearmotoren, Riemenantriebe oder Kettenantriebe denkbar.

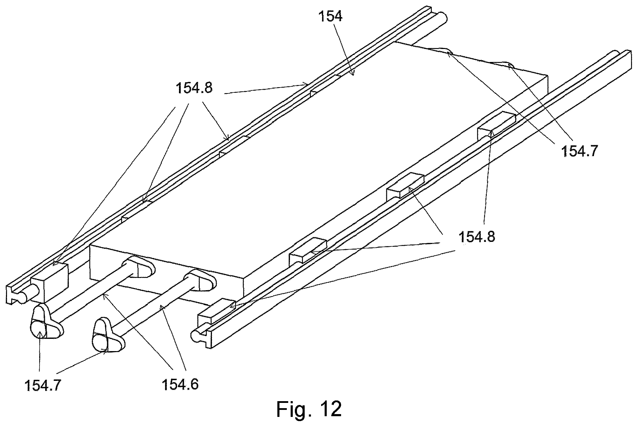

Ein Extender 154 einer alternativen Ausbildungsform der Erfindung ist isoliert aus einer Perspektive in **Fig. 12** dargestellt. Der Extender 154 wird als Einheit beispielsweise mithilfe einer nicht dargestellten Linearführung unterstützt durch seitliche Führungselemente 154.8 vor und zurück bewegt. An starren Stäben 154.6 befestigte Nocken 154.7 dienen zum Eingriff in korrespondierende Eingreifstrukturen 212 an Trägerelementen 210. Die Nocken 154.7 sind dabei rotierbar gelagert und zwischen einer Arbeitsstellung, in der sie in der Eingreifstruktur 210 arretiert sind, und einer Ruhestellung, in der sie von der Eingreifstruktur 210 gelöst sind, schaltbar/aktivierbar. Diese Konfiguration eines Extenders 154 ist besonders vorteilhaft für die Stabilität der Transporteinheit 150. Die Stäbe 154.6 sind dabei nicht zwangsweise starr ausgebildet, sondern können beispielsweise teleskopartig ausfahrbar sein. Die starre Ausbildung der Stäbe 154.6 hat sich jedoch als förderlich bei der Ein- und Auslagerung von Paketen 500 beziehungsweise Trägerelementen 210 herausgestellt.

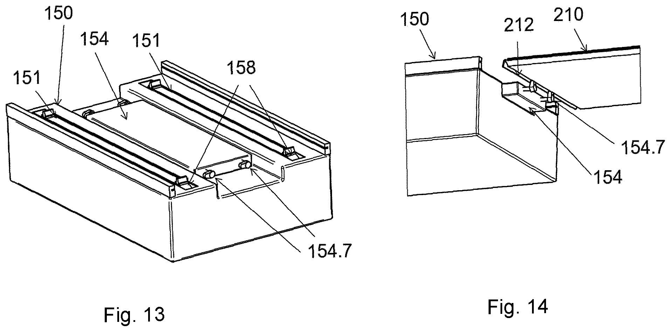

In **Fig. 13** ist eine Transporteinheit 150 mit einem Extender 154, wie er in Fig. 12 dargestellt ist, abgebildet. Der Extender 154 ist dabei vertikal versetzt zu zwei außen liegenden linearen Führungssystemen 151, sodass ein hier nicht dargestelltes Trägerelement 210 in einer Transportposition auf der Transporteinheit 150 nur auf den außen liegenden linearen Führungssystemen 151 aufliegen würde und das Trägerelement 210 nicht auf dem Extender 154 reiben würde.

Die in Fig. 13 vorgeschlagene Transporteinheit 150 ist in **Fig. 14** bei der Führung eines Trägerelements 210 über einen Endpunkt/Umschlagspunkt 158 (siehe Fig. 13) der linearen Führungssysteme 151 hinaus zu sehen. Die an den starren Stäben 154.6 angeordneten Nocken 154.7 sind in Arbeitsstellung in der Eingreifstruktur 212 des Trägerelements 210 arretiert.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste:

- 100: Mobile Depoteinrichtung
- 110: Übergabeeinrichtung
- 111: Sensoreinheit
- 120: Verbindungsmittel
- 150: Transporteinheit
- 151: Lineares Führungssystem
- 152: Eingriffselement
- 153: Schienen
- 154: Extender
- 154.1: Gelenk
- 154.2: Arm
- 154.3: Arm
- 154.4: Hauptarm
- 154.6: Stab
- 154.7: Nocken
- 154.8: Führungselement
- 156: Führungsmittel
- 157: Schlitten
- 158: Endpunkt/Umschlagspunkt
- 160: Transportweg
- 161: Achse
- 200: Lagerposition
- 210: Trägerelement
- 211: Trägerboden
- 212: Eingreifstruktur
- 213: Schiebekanten
- 250: Lager
- 300: Zuordnungsmittel
- 500: Paket

## Patentansprüche

1. Mobile Depoteinrichtung (100) für eine Lagerung und Bereitstellung mehrerer Pakete (500) innerhalb eines vorgesehenen Übergabezeitraums an einem Standort, aufweisend
- eine Übergabeeinrichtung (110) zum Annehmen und/oder Ausgeben von Paketen (500),
- Trägerelemente (210) und ein Lager (250) für Trägerelemente (210), wobei die Trägerelemente (210) einen Trägerboden (211) zur Aufnahme eines Pakets (500) aufweisen und entlang eines gegenüberliegenden Seitenpaars je eine Eingreifstruktur (212) und entlang des anderen gegenüberliegenden Seitenpaars Schiebekanten (213) aufweisen,
- eine Vielzahl von Lagerpositionen (200), wobei die Trägerelemente (210) entlang ihrer Schiebekanten in die Lagerpositionen (200) einschiebbar sind,
- ein Verbindungsmittel (120) zum Verbinden der Depoteinrichtung (100) mit einem Zuordnungsmittel (300) für eine Zuordnung von Paketidentifikationsmerkmalen zu Lagerpositionen (200),
- eine Transporteinheit (150), die sich entlang eines Transportwegs (160) in der mobilen Depoteinrichtung (100) bewegen kann und die Pakete (500) in Lagerpositionen (200) der Depoteinrichtung (100) einbringen kann, wobei die Transporteinheit (150) auf wenigstens einem linearen Führungssystem (151) angeordnete Eingriffselemente (152) aufweist, die in eine Eingreifstruktur (212) an wenigstens einer Seite der Trägerelemente (210) eingreifen können und wobei die Transporteinheit (150) wenigstens einen mit dem wenigstens einen linearen Führungssystem (151) verbundenen Motor aufweist, um die Eingriffselemente (152)_in Richtung der Lagerpositionen (200) zu verschieben,
- wobei der Transport der Pakete (500) durch die Transporteinheit (150) innerhalb der Depoteinrichtung (100) unter Berücksichtigung der den jeweiligen Paketen (500) anhand der Paketidentifikationsmerkmale zugeordneten Lagerpositionen (200) steuerbar ist.

2. Mobile Depoteinrichtung (100) nach Anspruch 1,
**dadurch gekennzeichnet, dass**
das lineare Führungssystem (151) ein Förderband ist, die Eingriffselemente (152) auf dem Förderband angeordnete Mitnehmer sind und die Eingreifstruktur (212) eine Eingriffsnut mit zu den Mitnehmern korrespondierenden Dimensionen ist.

3. Mobile Depoteinrichtung (100) nach Anspruch 1 oder 2,
**dadurch gekennzeichnet, dass**
die Transporteinheit (150) weiter wenigstens einen ausfahrbaren/ausklappbaren Extender (154) aufweist, der in angehobenem/aktiviertem Zustand in die Eingreifstruktur (212) der Trägerelemente (210) eingreift und der geeignet ist, die Trägerelemente (210) über einen Endpunkt/Umschlagspunkt (158) des wenigstens einen linearen Führungssystems (151) hinaus mitzunehmen, wobei die Länge des Extenders (154) einen Abstand zwischen dem Endpunkt/Umschlagspunkt (158) des linearen Führungssystems (151) und einer dem Transportweg (160) zugewandten Kante der Lagerpositionen (200) überschreitet und durch Antreiben eines mit dem Extender (154) verbundenen Führungsmittels (156) der Spalt zwischen Transporteinheit (150) und Lagerposition (200) durch den Extender (154) überbrückt wird.

4. Mobile Depoteinrichtung (100) nach einem der vorigen Ansprüche,
**dadurch gekennzeichnet, dass**
die Transporteinheit (150) drei parallel angeordnete Förderbänder aufweist, wobei auf den jeweils äußeren Förderbändern Eingriffselemente (152) angeordnet sind und ein mittleres Förderband mit dem ausfahrbaren/ausklappbaren Extender (154) verbunden ist.

5. Mobile Depoteinrichtung (100) nach einem der vorigen Ansprüche,
**dadurch gekennzeichnet, dass**
der Transportweg (160) als eine Transportgasse ausgebildet ist und die Transporteinheit (150) spiegelsymmetrisch angeordnete Eingriffselemente (152) beidseitig verschieben kann, wobei die Symmetrieachse entlang der Transportgasse verläuft.

6. Mobile Depoteinrichtung (100) nach einem der vorigen Ansprüche,
**dadurch gekennzeichnet, dass**
die Lagerpositionen (200) durch Auflageschienen ausgebildet sind und dass die Transporteinheit (150) ein Mittel aufweist, mit dem eine vertikale Position der Transporteinheit (150) verändert werden kann.

7. Mobile Depoteinrichtung (100) nach Anspruch 6,
**dadurch gekennzeichnet, dass**
die Auflageschienen vertikal äquidistant verteilt sind und der Abstand zwischen zwei benachbarten Auflageschienen 5 cm unterschreitet und bevorzugterweise 3,5 cm beträgt.

8. Mobile Depoteinrichtung (100) nach einem der vorigen Ansprüche,
**dadurch gekennzeichnet, dass**
eine Sensoreinheit (111) in der Übergabeeinrichtung (110) angeordnet ist, die wenigstens ein Paketidentifikationsmerkmal eines einzulagernden Pakets (500) erfassen kann, wobei die Zuordnung des Pakets (500) zu der Lagerposition (200) unter Berücksichtigung des erfassten Paketidentifikationsmerkmals erfolgt, wobei wenigstens eine Höhe des einzulagernden Pakets (500) erfasst wird.

9. Mobile Depoteinrichtung (100) nach einem der vorigen Ansprüche,
**dadurch gekennzeichnet, dass**
das Trägerelement (210) unterschiedliche Reibwerte an den Schiebekanten (213) und dem Trägerboden (211) aufweisen, wobei der Reibwert des Trägerbodens (211) wesentlich höher als der Reibwert der Schiebekanten (213) ist, und vorzugsweise so hoch ist, dass sich die Pakete nicht auf dem Trägerelement bewegen.

10. Mobile Depoteinrichtung (100) nach einem der vorigen Ansprüche,
**dadurch gekennzeichnet, dass**
die Transporteinheit (150) ein Haltemittel aufweist, mit dem das Trägerelement (210) gegen Verschieben oder Abheben gesichert ist.

11. Mobile Depoteinrichtung (100) nach Anspruch 10,
**dadurch gekennzeichnet, dass**
das Haltemittel Schienen (153) aufweist, in die die Schiebekanten (213) des Trägerelements (210) eingeschoben werden können.

12. Verfahren zum Betreiben einer mobilen Depoteinrichtung (100), insbesondere einer mobilen Depoteinrichtung nach einem der vorigen Ansprüche,
**dadurch gekennzeichnet, dass**
für einen Einlagerungsvorgang eines Pakets (500)
- eine Transporteinheit (150) ein Trägerelement (210) einem Lager (250) für Trägerelemente (210) entnimmt und in der Transporteinheit (150) arretiert,
- die Transporteinheit (150) in eine Übergabeeinrichtung (110) der mobilen Depoteinrichtung (100) fährt,
- die Übergabeeinrichtung (110) geöffnet wird, sodass ein Einlieferer ein Paket (500) auf den Trägerboden (211) des Trägerelements (210) legen kann,
- die Transporteinheit (150) wartet, bis das Paket (500) auf das Trägerelement (210) gelegt ist,
- eine in Abhängigkeit wenigstens eines Paketidentifikationsmerkmals zugeordnete Lagerposition (200) empfangen wird,
- die Transporteinheit (150) entlang eines Transportwegs (160) in der mobilen Depoteinrichtung (100) gesteuert wird, bis sich die Transporteinheit (150) in einer der empfangenen Lagerposition gegenüberliegenden Position befindet,
- ein Motor wenigstens ein lineares Führungssystem (151) antreibt, das über Eingriffselemente (152) in eine Eingreifstruktur (212) des Trägerelements greift, und das das Trägerelement (210) auf seinen Schiebekanten (213) in die Lagerposition (200) einschiebt,
und **dass**
für einen Auslagerungsvorgang eines Pakets (500),
- anhand eines Paketidentifikationsmerkmals eine Lagerposition (200) empfangen wird,
- die Transporteinheit (150) entlang des Transportwegs (160) in der mobilen Depoteinrichtung (100) gesteuert wird, bis sich die Transporteinheit (150) in einer der empfangenen Lagerposition gegenüberliegenden Position befindet,
- der Motor das wenigstens eine lineare Führungssystem (151) antreibt, das über Eingriffselemente (152) in die Eingreifstruktur (212) des in der Lagerposition (200) befindlichen Trägerelements (210) eingreift und das das Trägerelement (210) auf seinen Schiebekanten (213) aus der Lagerposition (200) herauszieht und auf der Transporteinheit (150) festhält, vorzugsweise arretiert,
- die Transporteinheit (150) mit dem Paket (500) in die Übergabeeinrichtung (110) der mobilen Depoteinrichtung (100) fährt,
- die Übergabeeinrichtung (110) geöffnet wird, so dass ein Empfänger das Paket (500) entnehmen kann und
- die Transporteinheit (150) das Trägerelement (210) in das Lager (250) für die Trägerelemente (210) einbringt.

13. Verfahren zum Betreiben einer mobilen Depoteinrichtung (100) nach Anspruch 12, **dadurch gekennzeichnet, dass**
bei einem Einlagerungsvorgang beim Einschieben des Trägerelements (210) in die Lagerposition (200), bevor oder während die auf wenigstens einem linearen Führungssystem (151) befindlichen Eingriffselemente (152) sich an einem Endpunkt/Umschlagspunkt (158) des linearen Führungssystems (151) aus der Eingreifstruktur (212) herauslösen, wenigstens ein Extender (154) ausklappt/ausfährt und angehoben wird, sodass er von unten in die Eingreifstruktur (212) eingreift und das Trägerelement (210) über den Endpunkt/Umschlagspunkt (158) des linearen Führungssystems (151) hinaus in die Lagerposition (200) einschiebt, wobei der Extender (154) vor einem Zurückfahren abgesenkt wird, ehe der Extender und das lineare Führungssystem (151) in ihre Ausgangsposition zurückfahren,
und **dass**
bei einem Auslagerungsvorgang beim Herausziehen des Trägerelements (210) aus der Lagerposition (200) der Extender (154) in einer abgesenkten Position so weit ausgelenkt wird, bis der Extender bei einem Anheben von unten in die Eingreifstruktur (212) des Trägerelements (210) eingreifen würde, der Extender (154) angehoben und anschließend zurückgefahren wird, bis sich die Eingreifstruktur (212) des Trägerelements (210) über dem Endpunkt/Umschlagspunkt (158) des linearen Führungssystems (151) befindet, wobei das wenigstens eine mit Eingriffselementen (152) ausgestattete lineare Führungssystem (151) zurückfährt, bis die Eingriffselemente (152) in die Eingreifstruktur (212) des Trägerelements (210) eingreifen, sodass der Extender (154) eingeklappt/abgetaucht werden kann und das Trägerelement (210) über die Eingriffselemente (152) auf die Transporteinheit (150) gezogen und festgehalten, vorzugsweise arretiert, wird.
